(19) **Europäisches Patentamt**

**European Patent Office**

**Office européen des brevets**

(11) **EP 1 579 371 B1**

(12) **EUROPEAN PATENT SPECIFICATION**

(45) Date of publication and mention
of the grant of the patent:
**27.12.2006 Bulletin 2006/52**

(21) Application number: **03777122.7**

(22) Date of filing: **17.12.2003**

(51) Int Cl.:
*G06K 9/00* (2006.01)

(86) International application number:
**PCT/IB2003/006108**

(87) International publication number:
**WO 2004/057522 (08.07.2004 Gazette 2004/28)**

(54) **ILLUMINATION INVARIANT FACE RECOGNITION**

BELEUCHTUNGSUNABHÄNGIGE GESICHTSERKENNUNG

RECONNAISSANCE D'UNE FACE INVARIABLE A L'ECLAIRAGE

(84) Designated Contracting States:
**AT BE BG CH CY CZ DE DK EE ES FI FR GB GR HU IE IT LI LU MC NL PT RO SE SI SK TR**

(30) Priority: **20.12.2002 US 435247 P**

(43) Date of publication of application:
**28.09.2005 Bulletin 2005/39**

(73) Proprietor: **Koninklijke Philips Electronics N.V.**
**5621 BA Eindhoven (NL)**

(72) Inventors:
• **TRAJKOVIC, Miroslav**
**Briarcliff Manor, NY 10510-8001 (US)**
• **GUTTA, Srinivas**
**Briarcliff Manor, NY 10510-8001 (US)**
• **PHILOMIN, Vasanth**
**Briarcliff Manor, NY 10510-8001 (US)**

(74) Representative: **Groenendaal, Antonius W. M.**
**Philips**
**Intellectual Property & Standards**
**P.O. Box 220**
**5600 AE Eindhoven (NL)**

(56) References cited:
**US-A- 6 072 496**

• **DORNAIKA F ET AL: "Face model adaptation using robust matching and active appearance models" PROC. IEEE WORKSHOP ON APPLICATIONS OF COMPUTER VISION, 3 December 2002 (2002-12-03), pages 3-7, XP010628716**
• **FISCHLER M A ET AL: "RANDOM SAMPLE CONSENSUS: A PARADIGM FOR MODEL FITTING WITH APPLICATIONS TO IMAGE ANALYSIS AND AUTOMATED CARTOGRAPHY" COMMUNICATIONS OF THE ASSOCIATION FOR COMPUTING MACHINERY, ASSOCIATION FOR COMPUTING MACHINERY. NEW YORK, US, vol. 24, no. 6, June 1981 (1981-06), pages 381-395, XP001149167 ISSN: 0001-0782**
• **ZHANG Z: "DETERMINING THE EPIPOLAR GEOMETRY AND ITS UNCERTAINTY: A REVIEW" INTERNATIONAL JOURNAL OF COMPUTER VISION, KLUWER ACADEMIC PUBLISHERS, NORWELL, US, vol. 27, no. 2, 1 March 1998 (1998-03-01), pages 161-195, XP000755415 ISSN: 0920-5691**

**Description**

This invention relates in general to face recognition and in particular to light invariant face recognition.

Face recognition systems are used for the identification and verification of individuals for many different applications such as gaining entry to facilities, recognition of people to personalize services such as in a home network environment, and locating wanted individuals in public facilities. The ultimate goal in the design of any face recognition system is to achieve the best possible classification (predictive) performance. Depending on the use of the face recognition system it may be more or less important to make sure that the comparison has a high degree of accuracy. In a high security application such as identifying wanted individuals, it is very important that identification is achieved regardless of minor changes in the captured image vs. the stored image.

The process of face recognition typically requires the capture of an image, or multiple images, of a person, processing the image or images and then comparing the image with stored images. If there is a positive match between the stored image and the captured image the identity of the individual can either be found or verified. U.S. Patent No. 6,292,575 describes such a system and is hereby incorporated by reference.

The US Patent 6.072.496 describes a method for robust tracking in which manually placed markers were traced over time on an actor's face for modelling human facial expressions. The correspondence between markers is found by ray tracing in combination with RANSAC.

Dornaika and Ahlberg ("Face Model Adaptation using Robust Matching and Active Appearance Models" , Proc. 6th IEEE Workshop on Applications of Computer Vision, pp. 3-7, 2002) find robust 3D - to - 2D point correspondences between the vertices of a 3D wireframe model and a 2D image human face. The vertices of the 3D model correspond to different facial elements.

The processing of the images includes normalization. Normalization insures that the size of the face in the captured image is relatively the same size as in the stored images. This normalization is an attempt at controlling differences that might occur in a captured image which are not found in a stored image (and visa-versa). These differences cause false negative identification results when the two faces are compared but when in actuality the same person appears in both images.

Many systems also control the lighting of the captured image to insure that the lighting will be similar to the lighting of the stored images. Once the individual is positioned properly the camera takes a single or multiple pictures of the person and a comparison is made to stored pictures. A problem with these systems is that for many applications, such as for security applications, sometimes the lighting of the captured image is different than the lighting used for the stored image. When the lighting is different in the captured image than the lighting in the stored image there is a chance a false negative identification result. Since it is not always possible to have the same lighting, a system is needed which will take into account the different lighting.

Accordingly, it is an object of the invention to provide a system that performs face identification/verification which is less susceptible to errors caused by light variation.

This object is achieved by taking random samples of pixels within the face and performing comparisons with the same random samples in the stored images. The comparison is performed using almost any form of face recognition. The RANSAC algorithm is used to perform robust matching. (M. Fischler and R. Bolles - "Random Sample Consensus : A paradigm for Model Fitting with Applications to Image Analysis and Automated Cartography", Communications of the ACM, vol. 24, no. 6 , pp. 381-395, 1981). The RANSAC algorithm helps eliminate the possibility of having shadowed regions of the face causing false negative results.

In one embodiment of the invention instead of a purely random sampling, a weighted sampling is used which is weighted in the areas of the face which are least likely to be affected by lighting. A determination is made as to which areas of the face are more likely to be affected by lighting. The samplings are then weighted in the areas where there is a lower probability of light changes. These weighted samples are then compared to the like pixels in the stored images using face recognition to determine similarity.

Other objects and advantages will be obvious in light of the specification and claims.

For a better understanding of the invention reference is made to the following drawings:

Fig. I a shows the selection of a line through a set of points in the presence of outliers.

Fig. I b shows the selection of a line through a set of points in the presence of outliers using the RANSAC algorithm.

Fig. 2 shows a flow chart of a preferred embodiment which uses the RANSAC algorithm to perform robust face recognition.

Fig. 3a shows images of random pixel samples of size 1000, for an image of size 64x72.

Fig. 3b shows random pixel samples for real images of size 133x100, and the random sample being 40% of the image.

Fig. 4 shows a flow chart of how weighted sampling is used in an exemplary embodiment of the invention.

Fig. 5 shows a security system in accordance with a preferred embodiment of the invention.

In typical face recognition programs pixels of a captured image are compared to pixels of stored images using face recognition methods. If a certain percentage of pixels match the same pixels in a stored image, the images are deemed to match and a verification or identification has occurred. There are many known face recognition methods which determine similarity between images. The term "match" as used herein can mean a probability of a match, an exact match, or enough pixels match above a predetermined threshold that identification is probable, or the similarity index found after performing face recognition on these samples is above a certain threshold. The problem is that if a portion of the face in the captured image has a shadow from a light source, and the image of this person in the stored database is shadow-free, when the pixels of the two images are compared it is likely that those pixels within the shadow will not match the corresponding pixels in the stored image. This is because there will be a large percentage of non-matching pixels due to uneven lighting rather than due to the faces in the images being from different people. If a certain percentage of pixels must match to be deemed a proper identification, the large percentage of non-matching pixels will cause a false negative match.

It has been found that face recognition can be performed on portions of a face rather than an entire face. The present invention chooses random samples of pixels within the face but these random samples are chosen as part of an algorithm which ignores "outliers", i.e. data points that lie outside of a majority of the data points. The RANSAC algorithm is a robust estimation algorithm that avoids "outliers" from the chosen samples from causing incorrect matching results and it is used in a preferred embodiment of the instant invention. Other such algorithms can also be used such as the least median of squares (LmedS). The RANSAC algorithm, as explained below in more detail, chooses pixels randomly and detects "outliers" which in the present invention are the shadowed regions.

In a preferred embodiment of the invention the captured image is compared to the stored images using a known face recognition algorithm and if no match is found, then the captured image is randomly sampled and the random sample of pixels $T_j$ is compared to the same random sample in the stored images using a face recognition algorithm. The number of random samples selected is determined by the computing power and the degree of accuracy that is needed for a particular application. In a preferred embodiment, anywhere from 100 to 1000 or more sets of samples are chosen. Face recognition is performed on all samples. The sample that provides the best result (i.e. the sample that most closely matches the same sample in a stored image) is chosen and the result of the sample comparison is compared to a threshold. If the sample of the captured image matches the same sample in a stored image then the stored image is deemed to show the same person as in the captured image. The stored image that provides this match has a higher probability of being the same face as in the captured image since it is likely that one of the samples will be relatively free of outliers. This results in fewer false negatives since the random sample is less likely to include the portions of the face that are affected by lighting.

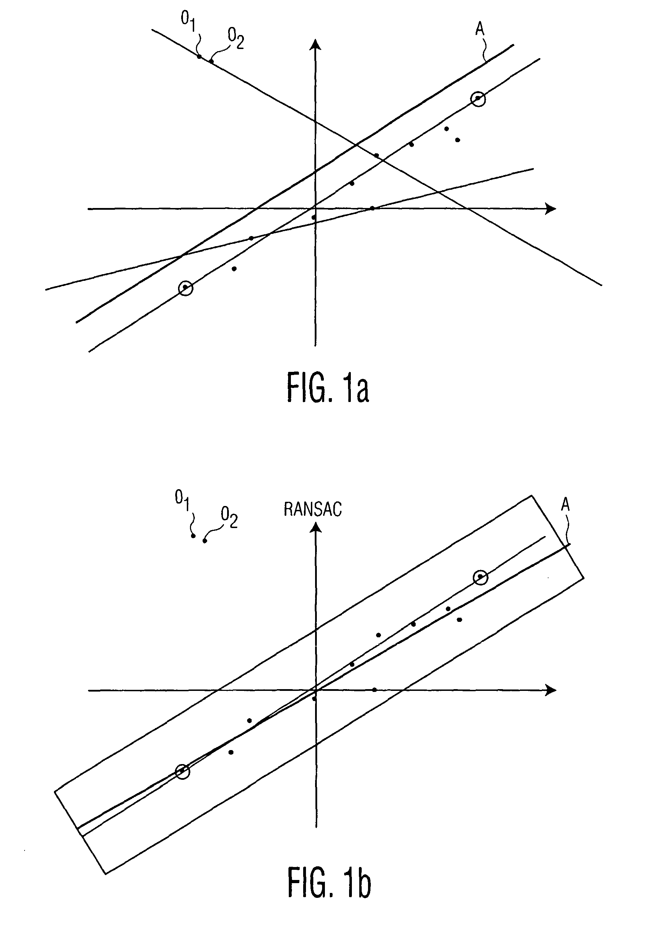

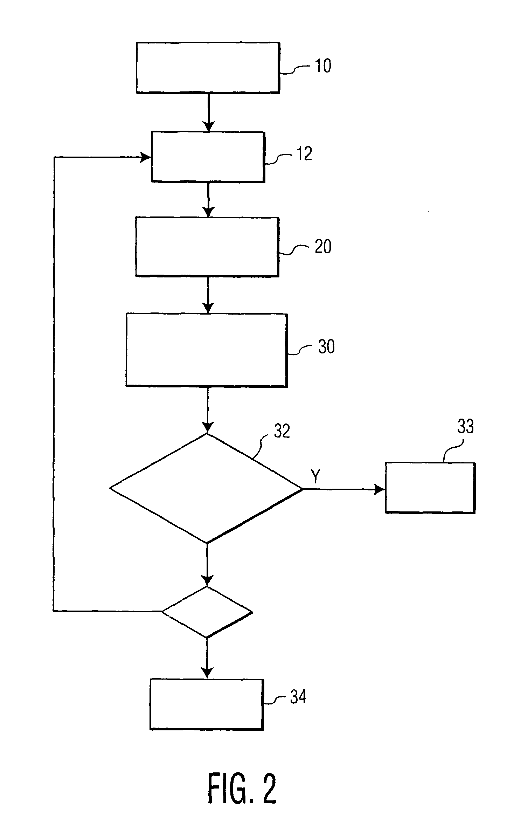

Fig. 2 shows a flow chart of a preferred method of this invention. At 10 an image is acquired. At 12, for I=1:X a random sample subset 20 is created. I is an increment and X is determined based on computing power and degree of accuracy needed. The RANSAC algorithm is used to select the subset and the number of subsets. RANSAC stands for Random Sample Consensus and it will be explained herein in terms of line estimation. It works similarly in other cases such as in images. Assume that a random sample of points exists as shown in Fig. la, and a line A must be fitted through these points. If there are outliers (there are two $O_1$ and $O_2$ in Fig. 1a, in the northwest quadrant) the line A will be significantly shifted from the true position. Fig. 1b shows this same random sample of points, but the line A is fitted using the RANSAC algorithm. In Fig. 1b the line A is a better line estimation than Fig. I b if we assume that $O_1$ and $O_2$ are erroneous data points. RANSAC works the following way:

1. Randomly pick a minimal number of points needed to estimate the line (two).
2. Fit the line through these points.
3. Count the number of points from the set that are close to the line (according to a given criteria, i.e. all the points that are closer than three pixels are OK -they support the model.) Denote the number $N_j$, which quantitatively represents the concentration of points near the line.
4. Repeat steps 1-3 enough times to ensure with a certain probability (usually 95-99%) that at least the two points that have been selected are a good representation of a concentration of the points.
5. Find the greatest of all $N_j$ and the line that has produced this $N_j$. Using all $N_j$ points that support this line, estimate the optimal line using ordinary least squares method.

To perform general random sampling of pixels in an image, we represent an image as a vector, i.e., each pixel is assigned a unique number as shown in Table 1.

| 1 | 2 | 3 | ... | 63 | 64 |
|------|------|-----|-----|------|------|
| 65 | 66 | ... | | | 128 |
| ... | | | | | |
| | | | | | |
| | | | | | |
| | | | | | |
| | | | | | |
| | | | | | |
| 4481 | 4482 | ... | | | |
| 4545 | 4546 | | | 4607 | 4608 |

72

Table 1. Pixel annotation for a 64×72 image.

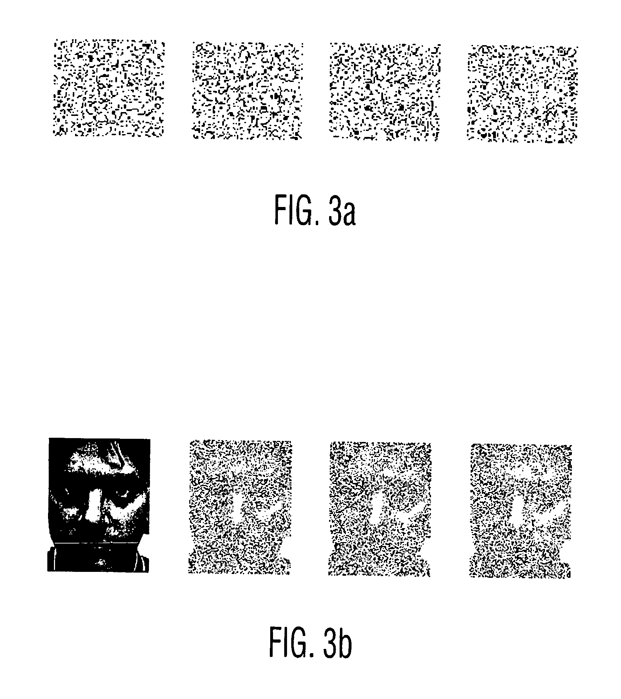

For the example given in Table 1, to create a sample of 100 random pixels we create a sample of random numbers between 1 and 4616, and then just choose pixels corresponding to the 100 random numbers. Fig. 3a shows images of random samples of size 1000, for an image of size 64x72. Fig. 3b shows random pixel samples for real images of size 133x100, and the random sample being 40% of the image. There is a wide majority of algorithms to create random numbers available in any programming language (C/C++, Fortran) or programming package (MATLAB, Mathematica, etc).

In a preferred embodiment of the present invention, random sampling is used in the form of RANSAC which is applied to perform face recognition as follows:

1. Randomly pick a certain number of pixels from a facial test image ($T_j$).
2. Compare $T_j$ with the corresponding (location-wise) pixels of the face in the database and compute a similarity measure $s_j$. (Note that $s_j$ corresponds to $N_j$ in original RANSAC algorithm.)
3. Repeat steps 1-2 enough times X to ensure with a certain probability (usually 95-99%) that all of the sample points are not significantly affected by light changes. X can be estimated experimentally or computed as follows:

Assume that the facial image in question is formed of 1000 pixels and that 50 of them are affected by light changes. Further assume that only 100 facial pixels can be selected to perform face recognition. If all 100 pixels are from the 950 pixels that are not affected by light changes, then there should be good recognition results. The probability that none of the selected 100 pixels are affected by light changes is given by

$$p = \frac{\binom{950}{100}}{\binom{1000}{100}} = 0.0044758$$

If it is necessary to guarantee that at least one sample is outlier free with the probability of .99, then the number of samples X that needs to be chosen can be obtained from

4

$$(1-p)^X < .01 \Rightarrow X \geq \frac{\ln 0.01}{\ln(1-p)} = 1027$$

4. The measure of similarity is now obtained as $s = \max(s_j)$.

5. If s is above some given threshold, then we have a match, otherwise there is no match.

As explained above, the sets of regions are chosen randomly; for a large enough X it is likely that at least one set of regions will have consistent lighting that will match well with the corresponding set of regions in the database. If there is a high similarity, then there is a match between the captured image and the stored image with high similarity.

Referring back to Fig. 2. after the image is acquired at 10, then for X = 1 to 1000 a random sample subsets (20) are chosen. For each sample, face recognition is performed on the sample by comparing using the RANSAC or other outlier detection algorithm, the sample of the captured image with the same random samples in the stored images at 30. If there is a high similarity 32 between the two samples then assume a match 33 between faces. Store the subset with the highest number of matches and determine if the number is high enough to declare a match between the images. If not then there is no match 34. In a first embodiment the face recognition is performed until a match is found or until X is reached. In a second embodiment, all samples are compared and the sample with the highest similarity is compared to a threshold to determine if there is a match.

WEIGHTED SAMPLING FOR LIGHT INVARIANT RECOGNITION

While in uniform sampling all the pixels have the same probability of being chosen, in weighted sampling, some pixels are more likely to be chosen than the others. Weighted sampling has also been studied extensively in literature, and we will explain the difference between it and uniform sampling through the following example.

Let us assume that we need to choose one number between 1 and 5 (array X), but that sampling is not uniform but weighted, as shown in Table 2.

Table 2

| X | 1 | 2 | 3 | 4 | 5 |
|---|---|---|---|---|---|
| Weights | .1 | .2 | .3 | .2 | .2 |

One way to perform weighted sampling using the weights set forth in Table 2 would be to form an auxiliary array Y ={1,2,2,3,3,3,4,4,5,5}

This array has 10 elements and, if uniform sampling is performed on the array Y it is equivalent to a weighted sampling of X. In this example, 2 is two times as likely to occur as 1; and 3 is most likely to occur with the probability of .3.

Weighted sampling for light-invariant face recognition is simply an extension of the use of the RANSAC algorithm in face recognition. In the previous case, sampling is performed uniformly, i.e. each pixel of the set $T_j$ is chosen with equal probability 1/(# of pixels in the face). In weighted sampling some pixels are more likely to be chosen than the others based on the following criteria.

Assume there is a face that has been photographed for 100 different illuminations. Compare each pixel $p_j$ in the original facial image (i.e. with uniform illumination) with the same pixel in the images obtained under different illuminations and count how many times the difference between them is below some given threshold. Let us denote this number $n_j$, and let

$$N = \sum_j n_j$$

The pixels with higher $n_j$ are more useful as they are less likely to be affected by illumination changes, so these pixels result in higher accuracy if they are part of the comparisons. In other words, using these pixels one is more likely to find a comparison that is illumination invariant. Accordingly in the weighted-sampling embodiment of this invention, these "light invariant pixels" are chosen more frequently as part of $T_j$. The probability of a pixel being selected in the weighted sample is not uniform but is given by the formula

$$prob(j) = \frac{n_j}{N}$$

The algorithm now proceeds the same way as with the RANSAC illumination invariant recognition described before.

Alternatively, to compute weights for sampling, computer graphics can be used. A 3D model of a head is created with light sources placed in different directions. Many computer graphics packages can then turn the 3d image back into 2 dimensions with the different light sources creating different effects on the 2 dimensional images. One can then determine which areas of the face have a higher likelihood of changing with different light sources. The portions of the face that have a low likelihood of changing can then receive a higher weight or a higher probability of being chosen than the pixels with a high likelihood of changing. Examples of programs that perform this type of ray tracing are POV-Ray, or OpenGL.

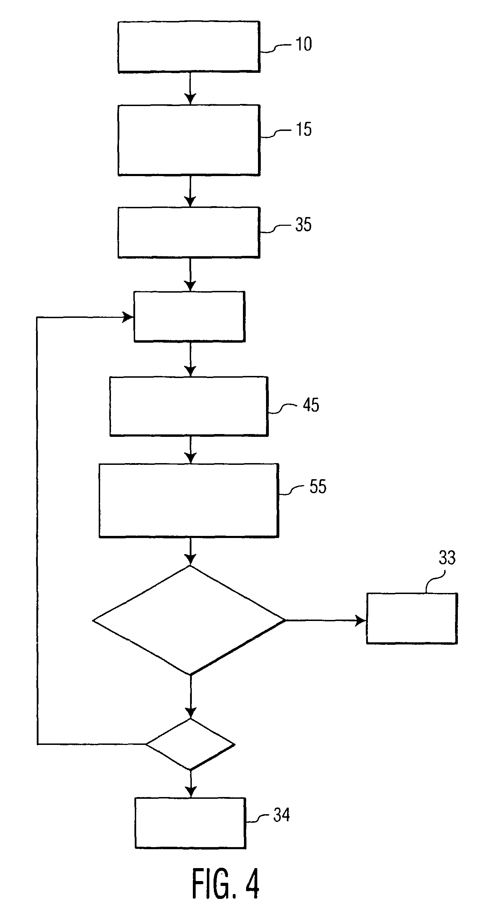

Fig. 4 shows a flow chart of a method of this invention where a weighted sampling is used. In this case an image is acquired at 10. The portions of the image most affected by light are determined at 15. The pixels are then weighted at 35 in favor of the light invariant pixels. At 12, for I = 1:X a weighted sample subset is chosen at 45. At 55 the weighted subset is compared using same form of face recognition with the same weighted sample of the stored image. A probability of a match is then determined based on the subset with the best result.

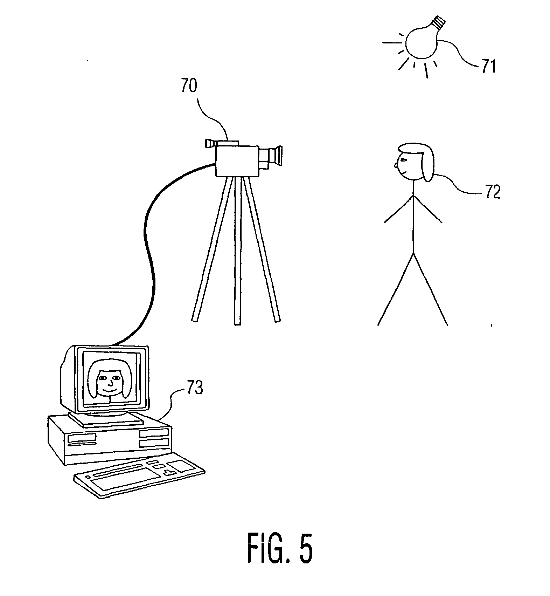

Fig. 5 shows a security application in accordance with the instant invention. An image is captured by an imaging device 70 of a person 72 walking into a room with an overhead light source 71. The image is compared to images stored in computer 73 in accordance with the invention.

While there has been shown and described what is considered to be preferred embodiments of the invention, it will, of course, be understood that various modification and changes in form or detail could readily be made.

It is therefore intended that the invention be not limited to the exact forms described and illustrated, but should be constructed to cover all modifications that may fall within the scope of the appended claims.

**Claims**

1. A method of comparing a captured image of a face to stored facial images comprising:

   a) retrieving a captured image;
   b) setting a default similarity index value;
   c) iteratively updating the similarity index value by performing at each iteration the following steps:

      c.1) taking random samples of pixels from facial regions of the captured image;
      c.2) taking location-wise corresponding samples of pixels from facial regions of the stored image of a face;
      c.3) performing face recognition by:

         c.3.1) comparing the random samples of the pixels of the captured facial image to the location-wise corresponding random samples of pixels of the stored facial image;
         c.3.2) calculating a new similarity index value characteristic of the comparison between the random samples of the captured facial image and the location-wise corresponding random samples of pixels of the stored image;
         c.3.3) replacing the similarity index value if the new similarity index is higher than a similarity index value obtained in previous iterations, and

      d) considering that a match has occurred if the similarity index value is above a predetermined threshold value.

2. The method as claimed in claim 1, wherein an outlier detection algorithm is used which removes samples from the face recognition which are considered erroneous.

3. The method as claimed in claim 2, wherein the outlier detection algorithm is the RANSAC algorithm.

4. The method as claimed in claim 2, wherein the outlier detection algorithm is the Least Median of Squares algorithm.

5. The method is accordance with claim 1, wherein pixels within the facial region of the image are weighted depending one the likelihood of being affected by light, and taking random samples of pixels from facial regions of the captured image depends on the weighting of the pixels.

6.  The method in accordance with claim 1, wherein the step of considering occurs during iteration, such that if there is a match no additional random samples need to be taken and compared.

7.  The method in accordance with claim 1, wherein the number of iterations is established according to a desired accuracy such that one of the samples is outlier free with a desired probability.

8.  The method in accordance with claim 1, wherein the number of iterations is established according to computing requirements.

9.  A device for comparing a captured image of a face to stored facial comprising:

    - a device which receives a facial captured image;
    - a device which obtains a stored facial image;
    - a processor which performs the following function:

        - setting a default similarity index value;
        - comparing random samples of the pixels of the captured image to the location-wise corresponding random samples of pixels of the stored image;
        - calculating new similarity index value characteristic of the comparison between the random samples of the captured facial image and the location-wise corresponding random samples of pixels of the stored facial image;
        - replacing the similarity index value with the new similarity index value if the new similarity index is higher than a similarity index value obtained in previous iterations, and

        - - considering that a match has occurred if the similarity index value is above a predetermined threshold value.

10.  The device as claimed in claim 9, wherein the processor performs image comparison using an outlier detection algorithm which performs face recognition by removing samples from the face recognition which are considered erroneous.

11.  The device as claimed in claim 10, wherein the outlier detection algorithm is an RANSAC algorithm.

12.  The device as claimed in claim 10, wherein the outlier detection algorithm is the Least Median of Squares algorithm.

13.  The device as claimed in claim 9, wherein pixels within the facial region of the image are weighted depending one the likelihood of being affected by light, and taking random samples of pixels from facial regions of the captured image depends on the weighting of the pixels.

14.  The device as claimed in claim 9, wherein the considering occurs during iteration, such that if there is a match no additional random samples need to be taken and compared.

15.  The device as claimed in claim 9, where the number of iterations is established according to computing requirements.

16.  The device as claimed in claim 9, where the number of iterations is established according to a desired accuracy such that one of the samples is outlier free with a desired probability.

**Patentansprüche**

1.  Verfahren zum Vergleichen eines aufgenommenen Bilds eines Gesichts mit gespeicherten Gesichtsbildern, umfassend:

    a) Abrufen eines aufgenommenen Bilds;
    b) Einstellen eines vorgegebenen Ähnlichkeitsindexwerts;
    c) iteratives Aktualisieren des Ähnlichkeitsindexwerts durch Durchführen der folgenden Schritte bei jeder Iteration:

c.1) Nehmen von Zufallspixelproben aus Gesichtsbereichen des aufgenommenen Bilds;
c.2) Nehmen von ortsweise entsprechenden Pixelproben aus Gesichtsbereichen des gespeicherten Bilds eines Gesichts;
c.3) Durchführen einer Gesichtserkennung durch:

c.3.1) Vergleichen der Zufallspixelproben des aufgenommenen Gesichtsbilds mit den ortsweise entsprechenden Zufallspixelproben des gespeicherten Gesichtsbilds;
c.3.2) Berechnen eines neuen Ähnlichkeitsindexwerts, welcher für den Vergleich zwischen den Zufallsproben des aufgenommenen Gesichtsbilds und der ortsweise entsprechenden Zufallspixelproben des gespeicherten Bilds kennzeichnend ist;
c.3.3) Ersetzen des Ähnlichkeitsindexwerts, falls der neue Ähnlichkeitsindex höher ist als ein Ähnlichkeitsindexwert, welcher in vorhergehenden Iterationen erhalten wurde, und

d) Annehmen, dass eine Übereinstimmung aufgetreten ist, falls der Ähnlichkeitsindexwert über einem vorbestimmten Schwellenwert liegt.

2. Verfahren nach Anspruch 1, wobei ein Ausreißererkennungsalgorithmus verwendet wird, welcher Stichproben aus der Gesichtserkennung entfernt, welche als fehlerhaft angesehen werden.

3. Verfahren nach Anspruch 2, wobei der Ausreißererkennungsalgorithmus der RANSAC-Algorithmus ist.

4. Verfahren nach Anspruch 2, wobei der Ausreißererkennungsalgorithmus der Least-Median-of-Squares-Algorithmus ist.

5. Verfahren nach Anspruch 1, wobei Pixel innerhalb des Gesichtsbereichs des Bilds in Abhängigkeit von der Wahrscheinlichkeit, durch Licht beeinträchtigt zu werden, gewichtet werden und wobei ein Nehmen von Zufallspixelproben von Gesichtsbereichen des aufgenommenen Bilds von den Gewichtungen der Pixel abhängt.

6. Verfahren nach Anspruch 1, wobei der Schritt des Annehmens derartig während der Iteration auftritt, dass, falls es eine Übereinstimmung gibt, keine zusätzlichen Zufallsproben genommen und verglichen werden müssen.

7. Verfahren nach Anspruch 1, wobei die Anzahl Iterationen gemäß einer erwünschten Genauigkeit derartig eingerichtet wird, dass eine der Stichproben mit einer erwünschten Wahrscheinlichkeit ausreißerfrei ist.

8. Verfahren nach Anspruch 1, wobei die Anzahl Iterationen gemäß Berechnungsanforderungen eingerichtet wird.

9. Vorrichtung zum Vergleichen eines aufgenommenen Bilds eines Gesichts mit einem gespeicherten Gesicht, umfassend:

- eine Vorrichtung, welche ein aufgenommenes Gesichtsbild empfängt;
- eine Vorrichtung, welche ein gespeichertes Gesichtsbild erhält;
- einen Prozessor, welcher die folgende Funktion durchführt:

- Einstellen eines vorgegebenen Ähnlichkeitsindexwerts;
- Vergleichen von Zufallspixelproben des aufgenommenen Bilds mit den ortsweise entsprechenden Zufallspixelproben des gespeicherten Bilds;
- Berechnen eines neuen Ähnlichkeitsindexwerts, welcher für den Vergleich zwischen den Zufallsproben des aufgenommenen Gesichtsbilds und der ortsweise entsprechenden Zufallspixelproben des gespeicherten Gesichtsbilds kennzeichnend ist;
- Ersetzen des Ähnlichkeitsindexwerts mit dem neuen Ähnlichkeitsindexwert, falls der neue Ähnlichkeitsindex höher ist als ein Ähnlichkeitsindexwert, welcher in vorhergehenden Iterationen erhalten wurde, und
- Annehmen, dass eine Übereinstimmung aufgetreten ist, falls der Ähnlichkeitsindexwert über einem vorbestimmten Schwellenwert liegt.

10. Vorrichtung nach Anspruch 9, wobei der Prozessor einen Bildvergleich unter Verwendung eines Ausreißererkennungsalgorithmus durchführt, welcher eine Gesichtserkennung durch Entfernen von Stichproben aus der Gesichtserkennung durchführt, welche als fehlerhaft angesehen werden.

**11.** Vorrichtung nach Anspruch 10, wobei der Ausreißererkennungsalgorithmus ein RANSAC-Algorithmus ist.

**12.** Vorrichtung nach Anspruch 10, wobei der Ausreißererkennungsalgorithmus der Least-Median-of-Squares-Algorithmus ist.

**13.** Vorrichtung nach Anspruch 9, wobei Pixel innerhalb des Gesichtsbereichs des Bilds in Abhängigkeit von der Wahrscheinlichkeit, durch Licht beeinträchtigt zu werden, gewichtet werden und wobei ein Nehmen von Zufallspixelproben von Gesichtsbereichen des aufgenommenen Bilds von den Gewichtungen der Pixel abhängt.

**14.** Vorrichtung nach Anspruch 9, wobei das Annehmen derartig während der Iteration auftritt, dass, falls es eine Übereinstimmung gibt, keine zusätzlichen Zufallsproben genommen und verglichen werden müssen.

**15.** Vorrichtung nach Anspruch 9, wobei die Anzahl Iterationen gemäß Berechnungsanforderungen eingerichtet wird.

**16.** Vorrichtung nach Anspruch 9, wobei die Anzahl Iterationen gemäß einer erwünschten Genauigkeit derartig eingerichtet wird, dass eine der Stichproben mit einer erwünschten Wahrscheinlichkeit ausreißerfrei ist.

## Revendications

**1.** Procédé de comparaison d'une image saisie d'un visage à des images de visage stockées, comprenant :

   a) l'extraction d'une image saisie ;
   b) l'établissement d'une valeur d'indice de similarité par défaut ;
   c) la mise à jour de la valeur d'indice de similarité par itération en exécutant à chaque itération les étapes suivantes :

   c.1) la prise d'échantillons aléatoires de pixels de régions de visage de l'image saisie ;
   c.2) la prise d'échantillons de pixels correspondant en emplacement dans les régions de visage de l'image stockée du visage ;
   c.3) l'exécution d'une reconnaissance de visage par :

   c.3.1) la comparaison des échantillons aléatoires des pixels de l'image de visage saisie avec les échantillons aléatoires de pixels correspondant en emplacement de l'image de visage stockée ;
   c.3.2) le calcul d'une nouvelle valeur d'indice de similarité caractéristique de la comparaison entre les échantillons aléatoires de l'image de visage saisie et des échantillons aléatoires de pixels correspondant en emplacement de l'image stockée ;
   c.3.3) le remplacement de la valeur de l'indice de similarité si le nouvel indice de similarité est supérieur à une valeur d'indice de similarité obtenue dans des itérations précédentes, et

   d) la considération que la correspondance a eu lieu si la valeur d'indice de similarité est supérieure à une valeur seuil prédéterminée.

**2.** Procédé selon la revendication 1, dans lequel un algorithme de détection d'observations aberrantes est utilisé, qui retire de la reconnaissance de visage des échantillons qui sont considérés comme erronés.

**3.** Procédé selon la revendication 2, dans lequel l'algorithme de détection d'observations aberrantes est l'algorithme RANSAC.

**4.** Procédé selon la revendication 2, dans lequel l'algorithme de détection d'observations aberrantes est l'algorithme de la méthode des moindres carrés.

**5.** Procédé selon la revendication 1, dans lequel des pixels de la région de visage sont pondérés en fonction de la tendance à être influencés par la lumière, et la prise d'échantillons aléatoires de pixels des régions de visage de l'image saisie dépend de la pondération des pixels.

**6.** Procédé selon la revendication 1, dans lequel l'étape de considération a lieu pendant l'itération, de sorte que s'il y a correspondance, aucun échantillon aléatoire supplémentaire ne doit être pris et comparé.

**7.** Procédé selon la revendication 1, dans lequel le nombre d'itérations est établi en fonction d'une précision souhaitée de sorte qu'un des échantillons est exempt d'observations aberrantes avec une probabilité souhaitée.

**8.** Procédé selon la revendication 1, dans lequel le nombre d'itérations est établi en fonction des besoins de programmation.

**9.** Dispositif pour comparer une image saisie d'un visage à une image de visage stockée, comprenant :

- un dispositif qui reçoit une image de visage saisie ;
- un dispositif qui obtient une image de visage stockée ;
- un processeur qui exécute les fonctions suivantes :

- l'établissement d'une valeur d'indice de similarité par défaut ;
- la comparaison d'échantillons aléatoires des pixels de l'image saisie aux échantillons aléatoires de pixels correspondant en emplacement dans l'image stockée ;
- le calcul de la nouvelle valeur de l'indice de similarité caractéristique de la comparaison entre les échantillons aléatoires de l'image de visage saisie et les échantillons aléatoires de pixels correspondant en emplacement dans l'image de visage stockée ;
- le remplacement de la valeur de l'indice de similarité par la nouvelle valeur d'indice de similarité si le nouvel indice de similarité est supérieur à la valeur de l'indice de similarité obtenue dans des itérations précédentes, et
- la considération qu'une correspondance a eu lieu si la valeur de l'indice de similarité est supérieure à une valeur seuil prédéterminée.

**10.** Dispositif selon la revendication 9, dans lequel le processeur exécute une comparaison d'image en utilisant un algorithme de détection d'observations aberrantes qui exécute la reconnaissance de visage en retirant de la reconnaissance de visage les échantillons qui sont considérés comme erronés.

**11.** Dispositif selon la revendication 10, dans lequel l'algorithme de détection d'observations aberrantes est un algorithme RANSAC.

**12.** Dispositif selon la revendication 10, dans lequel l'algorithme de détection d'observations aberrantes est l'algorithme de la méthode des moindres carrés.

**13.** Dispositif selon la revendication 9, dans lequel des pixels dans la région de visage sont pondérés en fonction de la tendance à être influencés par la lumière, et la prise d'échantillons aléatoires de pixels des régions de visage de l'image saisie dépend de la pondération des pixels.

**14.** Dispositif selon la revendication 9, dans lequel la considération a lieu pendant l'itération, de sorte que s'il y a une correspondance, aucun échantillon aléatoire supplémentaire ne doit être pris et comparé.

**15.** Dispositif selon la revendication 9, où le nombre d'itérations est établi en fonction des besoins de programmation.

**16.** Dispositif selon la revendication 9, où le nombre d'itérations est établi en fonction d'une précision souhaitée de sorte qu'un des échantillons soit exempt de valeurs aberrantes avec une probabilité souhaitée.

FIG. 1a

FIG. 1b

FIG. 2

FIG. 3a

FIG. 3b

FIG. 4

FIG. 5